# EUROPÄISCHE PATENTSCHRIFT

(11) **EP 3 762 616 B1**
(45) Veröffentlichungstag und Bekanntmachung des Hinweises auf die Patenterteilung: **29.06.2022**
(21) Anmeldenummer: 19724153.2
(22) Anmeldetag: 09.05.2019
(51) Int. Cl.: F15B 13/02

(54) **VENTIL**
VALVE
SOUPAPE

(30) Priorität: 18.05.2018 DE 102018207927; 18.05.2018 DE 102018207929; 18.05.2018 DE 102018207928
(43) Veröffentlichungstag der Anmeldung: 13.01.2021
(73) Patentinhaber: HYDAC Systems & Services GmbH, 66280 Sulzbach (DE)
(72) Erfinder: BIWERSI, Sascha Alexander, 66693 Mettlach (DE)
(74) Vertreter: Bartels und Partner, Patentanwälte
(86) Internationale Anmeldenummer: PCT/EP2019/061898
(87) Internationale Veröffentlichungsnummer: WO 2019/219491

(56) Entgegenhaltungen:
- EP-A1- 0 833 013
- EP-A1- 1 108 895
- US-A1- 2004 182 233

## Beschreibung

Die Erfindung betrifft ein Ventil mit den Merkmalen im Oberbegriff von Anspruch 1.

Die Erfindung betrifft ferner ein Ventil mit einem Ventilgehäuse, das einen ersten Nutzanschluss und einen zweiten Nutzanschluss aufweist und in dem zum Ansteuern dieser Nutzanschlüsse längsverfahrbar ein Steuerschieber geführt ist, wobei durch eine Bewegung des Steuerschiebers aus einer Neutralstellung eine Fluidverbindung zwischen den Nutzanschlüssen herstellbar ist.

Die EP 1 108 895 A1 beschreibt ein Ventil mit einem Ventilgehäuse, das mindestens einen Druckversorgungsanschluss, einen ersten Nutzanschluss, einen zweiten Nutzanschluss und einen Rücklaufanschluss aufweist und in dem zum Ansteuern dieser einzelnen Anschlüsse längsverfahrbar ein Steuerschieber geführt ist, wobei in einer mittleren Neutralstellung des Steuerschiebers die Fluidverbindungen zwischen den Anschlüssen unterbrochen sind, wobei bei Bewegungen des Steuerschiebers aus der Neutralstellung in Richtung einer ersten Endstellung des Steuerschiebers der Druckversorgungsanschluss mit dem ersten Nutzanschluss und der zweite Nutzanschluss mit dem Rücklaufanschluss fluidführend verbunden ist, wobei bei Bewegung des Steuerschiebers aus der Neutralstellung in Richtung einer zweiten, der ersten Endstellung gegenüberliegenden Endstellung des Steuerschiebers der Druckversorgungsanschluss mit dem zweiten Nutzanschluss und der erste Nutzanschluss mit dem Rücklaufanschluss verbunden ist, wobei in den Endstellungen des Steuerschiebers die Nutzanschlüsse voneinander getrennt sind, wobei zwischen der Neutralstellung und einer der Funktionsstellungen eine Regenerationsstellung, in der die Nutzanschlüsse miteinander fluidführend verbunden sind, vorgesehen ist.

Die EP 0 833 013 A1 beschreibt ein Ventil mit einem Ventilgehäuse, das mindestens einen Druckversorgungsanschluss, einen ersten Nutzanschluss, einen zweiten Nutzanschluss und einen Rücklaufanschluss aufweist und in dem zum Ansteuern dieser einzelnen Anschlüsse längsverfahrbar ein Steuerschieber geführt ist, wobei in einer mittleren Neutralstellung des Steuerschiebers die Fluidverbindungen zwischen den Anschlüssen unterbrochen sind, wobei bei Bewegungen des Steuerschiebers aus der Neutralstellung in Richtung einer ersten Endstellung des Steuerschiebers der Druckversorgungsanschluss mit dem ersten Nutzanschluss und der zweite Nutzanschluss mit dem Rücklaufanschluss fluidführend verbunden ist, wobei bei Bewegung des Steuerschiebers aus der Neutralstellung in Richtung einer zweiten, der ersten Endstellung gegenüberliegenden Endstellung des Steuerschiebers der Druckversorgungsanschluss mit dem zweiten Nutzanschluss und der erste Nutzanschluss mit dem Rücklaufanschluss verbunden ist, wobei in den Endstellungen des Steuerschiebers die Nutzanschlüsse voneinander getrennt sind, wobei zwischen der Neutralstellung und einer der Funktionsstellungen eine Schwimmstellung, in der die Nutzanschlüsse miteinander fluidführend verbunden sind, vorgesehen ist.

Weiteren Stand der Technik beschreibt die US 2004/182233 A1.

Derartige Ventile, die zum Betrieb von Hydromotoren oder Differentialzylindern dienen, sind im Stand der Technik bekannt. Insbesondere bei Differentialzylindern, die Massen anheben oder absenken, hat es sich als vorteilhaft erwiesen, bei Bewegungen des Kolbens die aus der einen Arbeitskammer verdrängte Hydraulikflüssigkeit direkt in die andere Arbeitskammer wieder einzuspeisen, anstatt die Hydraulikflüssigkeit ungenutzt aus der einen Arbeitskammer in Richtung des Tanks abfließen zu lassen und parallel mit hohem Energieaufwand wieder aus dem Tank in die andere Arbeitskammer zu pumpen.

Zu diesem Zweck wurden in der Vergangenheit bereits Ventile entwickelt, bei denen neben den Stellungen Heben-Neutral-Senken auch noch eine Schwimmstellung, in welcher der Kolben des Differentialzylinders frei beweglich ist, und ein Eilgang, in dem sich der Kolben schneller bewegt, verwirklicht sind: DE 10 2008 008 092 A1 und DE 10 2007 054 137 A1. Der Eilgang wird auch als Regeneration bezeichnet. Die Logik der Stellungen des Ventilschiebers ist bei der DE 10 2008 008 092 A1 Heben-Neutral-Senken-Regeneration-Schwimmen. Im Falle der DE 10 2007 054 137 A1 ist die Logik Regeneration-Heben-Neutral-Senken-Schwimmen.

Wenn die Ventile zusätzlich als Load-Sensing-Ventile ausgeführt werden, bei denen ein Lastdruck insbesondere an einem der Nutzanschlüsse erfasst und an eine vorgeschaltete Individualdruckwaage und/oder eine Hydraulikpumpe weitergemeldet wird, hat sich gezeigt, dass im Betrieb viel Energie vergeudet wird und im Parallelbetrieb mehrerer Ventile Situationen auftreten, in den die Ventile einen größeren Pumpenvolumenstrom verbrauchen als die Pumpe liefern kann. Dieser Zustand wird auch als Untersättigung bezeichnet. Es gibt zwei Lastfälle beim Heben und Senken von Lasten mit einem Differentialzylinder, in denen das Verhalten der bekannten Ventile besonders energieineffizient ist: (1) Heben mit niedriger Last und (2) Senken mit hoher Last.

Im ersten Lastfall "Heben mit niedriger Last" verbindet das Ventil eine Bodenseite des Differentialzylinders mit einer Pumpe und dessen Stangenseite mit einem Tank. In diesem Fall muss die Pumpe die gesamte Hydraulikflüssigkeit liefern, die zum Ausfahren des Kolbens benötigt wird, wofür aber nur ein geringer Druck erforderlich ist. Wenn jetzt in einem System weitere Funktionen parallel betrieben werden, die mit höheren Lasten beaufschlagt werden, ist es erforderlich, den Pumpendruck mit einer Druckwaage auf ein der niedrigen Last angepasstes Niveau herunterzuregeln und mithin Hydraulikflüssigkeit nutzlos zum Tank abfließen zu lassen. Ein weiteres Problem ist, dass in diesem Fall vom Ventil möglicherweise ein so großer Pumpenvolumenstrom verbraucht wird, dass die parallel betriebenen Funktionen nicht ausreichend versorgt werden können und deshalb langsamer werden, obwohl theoretisch genügend Energie vorhanden ist, um alle Funktionen zu betreiben.

Im zweiten Lastfall "Senken mit hoher Last" verbindet das Ventil eine unter hohem Druck stehende Bodenseite mit dem Tank und die Stangenseite mit der Pumpe. In diesem Fall fließt die Hydraulikflüssigkeit ungenutzt von der Bodenseite zum Tank und parallel muss Hydraulikflüssigkeit auf der Stangenseite eingespeist werden. Dabei ist das Eigengewicht der Last in der Regel ausreichend, um ein Senken der Last zu ermöglichen, ohne dass es dazu der Unterstützung durch die Pumpe bedarf.

Ausgehend von diesem Stand der Technik ist es die Aufgabe der Erfindung, ein verbessertes Ventil aufzuzeigen, dass eine höhere Energieeffizienz und einen einfacheren Aufbau aufweist.

Diese Aufgabe wird durch ein Ventil mit den Merkmalen von Anspruch 1 gelöst. Vorteilhafte Ausführungsformen des Ventils gehen aus den Unteransprüchen hervor.

Gemäß dem Kennzeichen von Anspruch 1 ist vorgesehen, dass eine Regenerationsstellung, in der die Nutzanschlüsse miteinander fluidführend verbunden sind, zwischen der Neutralstellung und der ersten Endstellung des Steuerschiebers vorgesehen ist.

In diesem Fall ist die Schieberlogik so aufgebaut, dass die Schwimmstellung und die Regenerationsstellung symmetrisch um die Neutralstellung angeordnet sind. Auf diese Weise ist es möglich, sowohl beim Heben als auch beim Senken Pumpenleistung einzusparen.

Auf diese Weise lassen sich die energieeffizienteren Logiken Neutral-Regeneration-Heben bzw. Neutral-Schwimmen-Senken verwirklichen, in denen sichergestellt ist, dass zunächst die im Differentialzylinder zur Verfügung stehende Hydraulikflüssigkeit zum Bewegen der Last herangezogen wird, ehe zusätzliche Hydraulikflüssigkeit von der Pumpe eingespeist wird. Auf diese Weise wird beim Lastfall "Heben mit niedriger Last" ein sehr geringer Pumpenvolumenstrom benötigt und im Lastfall "Senken mit hoher Last" kann es sogar sein, dass gar kein Pumpenvolumenstrom benötigt wird. Besonders vorteilhaft ist in der Regenerationsschaltung der erste Nutzanschluss mit dem zweiten Nutzanschluss über den Druckversorgungsanschluss, vorzugsweise über mindestens zwei umfangsseitige Ausnehmungen am Steuerschieber, fluidführend verbunden. Somit kann gegenüber einem herkömmlichen 4/3-Wegeventil durch Vorsehen lediglich einer zusätzlichen Ausnehmung am Steuerschieber eine Regenerationsstellung ausgebildet werden, welche die erhebliche Einsparung an Pumpenleistung ermöglicht. Vorteilhaft ist es, wenn in der Regenerationsstellung der zweite Nutzanschluss ausschließlich mit dem Druckversorgungsanschluss verbunden ist und damit vom Rücklaufanschluss getrennt ist.

In der Schwimmstellung kann der erste Nutzanschluss mit dem zweiten Nutzanschluss über den Rücklaufanschluss, vorzugsweise über zwei umfangsseitige Ausnehmungen am Steuerschieber, fluidführend verbunden sein. Auch hier ist lediglich eine zusätzliche Ausnehmung am Steuerschieber erforderlich, um diese Funktionalität auszubilden. Das Fluid kann dann vom einen Nutzanschluss über den Rücklaufanschluss zum anderen Nutzanschluss fließen. Vorteilhaft ist hier, wenn in der Schwimmstellung der zweite Nutzanschluss ausschließlich mit dem Rücklaufanschluss verbunden ist und damit vom Druckversorgungsanschluss getrennt ist.

In einer besonders vorteilhaften Ausführungsform kann der Steuerschieber zwei Nutzanschlussausnehmungen aufweisen, die mit den Nutzanschlüssen in Überdeckung sind, und eine weitere Regenerationsausnehmung aufweisen, die zwischen den Nutzanschlussausnehmungen angeordnet ist. Ergänzend kann der Steuerschieber eine Schwimmausnehmung aufweisen, die zwischen einer Nutzanschlussausnehmung und einem benachbarten freien Ende des Steuerschiebers angeordnet ist. Auf diese Weise ist zur Ausbildung der Funktionalitäten keine Verlängerung des Steuerschiebers erforderlich. Die Ausnehmungen können vorteilhaft in einem bestehenden Steuerschieber eines 4/3-Wegeventils vorgesehen werden.

Im Ventilgehäuse kann weiterhin eine Load-Sensing-Leitung vorgesehen sein, die in der Neutralstellung des Steuerschiebers über eine Ausnehmung des Steuerschiebers zum Rücklaufanschluss hin druckentlastet ist. Insbesondere kann eine Nut im Steuerschieber einen Abschnitt der Load-Sensing-Leitung, der am Steuerschieber ausmündet, mit dem Rücklaufanschluss verbinden.

Mit Vorteil ist die Load-Sensing-Leitung mit einem der Nutzanschlüsse direkt verbunden, wenn sich der Steuerschieber außerhalb der Neutralstellung befindet. Hierzu können zwei Abschnitte der Load-Sensing-Leitung zwischen den Nutzanschlüssen in eine Steuerschieberbohrung ausmünden, von denen jeweils einer durch den Steuerschieber mit dem zugeordneten Nutzanschluss in Verbindung gebracht werden kann.

Zum Schalten des Steuerschiebers in die korrekten Positionen können Drucksensoren mit den Nutzanschlüssen verbunden sein, die an eine Steuereinrichtung angeschlossen sind, welche die Bewegungen des Steuerschiebers steuert. Auf diese Weise kann die Lastsituation vor dem Schalten des Ventils festgestellt werden, d.h. ob ein Heben oder Senken der Last in der Regenerationsstellung oder der Schwimmstellung möglich ist. Wenn dies nicht möglich ist, wird sofort in eine der Stellungen Heben oder Senken weitergeschaltet.

Die Ausnehmungen des Steuerschiebers kann mindestens eine proportionale Öffnungskante mit mindestens einer Steuernut aufweisen. Die Steuernut kann im Wesentlichen dreieckförmig ausgebildet sein. Weiterhin ist es vorstellbar, dass mehrere Steuernuten über die Öffnungskante verteilt an der jeweiligen Ausnehmung angeordnet sind. Die Steuernuten erlauben eine ruckfreie Bewegung der Last und es werden Druckspitzen im System vermieden.

Zum Bewegen des Steuerschiebers kann ein elektromechanischer Aktuator vorgesehen sein, der eine genaue Lageregelung des Steuerschiebers und einen ruckfreien Übergang zwischen den Stellungen des Steuerschiebers ermöglicht.

Die Erfindung wird nachfolgend anhand von einem in den Zeichnungen näher dargestellten Ausführungsbeispiel im Einzelnen erläutert. Es versteht sich, dass jedes Merkmal des erfindungsgemäßen Ventils einzeln für sich oder in Verbindung mit anderen zur Einschränkung eines Anspruchs herangezogen werden kann. Die Zeichnungen sind rein schematisch und nicht maßstäblich. Es zeigen:
- Fig. 1: eine schematische Darstellung eines Schaltplans eines hydraulischen Systems mit einem erfindungsgemäßen Ventil;
- Fig. 2: eine Seitenansicht und teilweise Schnittdarstellung des erfindungsgemäßen Ventils in einer Neutralstellung;
- Fig. 3: eine Schnittdarstellung des Ventils entlang der Linie A-A in Fig. 2;
- Fig. 4: eine vergrößerte Darstellung des Details X aus Fig. 3;
- Fig. 5: eine vergrößerte Darstellung des Details Y aus Fig. 3;
- Fig. 6: eine vergrößerte Darstellung des Details Z aus Fig. 3;
- Fig. 7-11: Schnittdarstellungen des Ventils in einer Regenerationsstellung;
- Fig. 12-16: Schnittdarstellungen des Ventils in einer Hebenstellung;
- Fig. 17-21: Schnittdarstellungen des Ventils in einer Schwimmstellung; und
- Fig. 22-26: Schnittdarstellungen des Ventils in einer Senkenstellung.

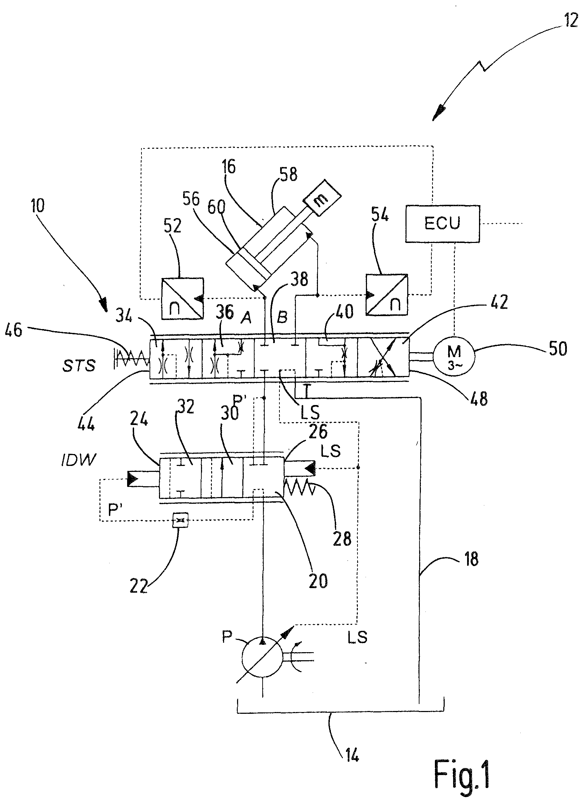

In der Fig. 1 ist in einer schematischen Darstellung ein hydraulischer Schaltplan eines erfindungsgemäßen Ventils 10 im Verbund eines hydraulischen Gesamtsystems 12 gezeigt. Eine Pumpe P saugt aus einem Tank 14 Hydraulikflüssigkeit an und fördert diese zu einer Individualdruckwaage IDW. Von der Individualdruckwaage IDW gelangt die Hydraulikflüssigkeit zu dem erfindungsgemäßen 5/5-Wege-Proportionalventil 10, insbesondere dessen Druckversorgungsanschluss P'. Ausgehend von den Nutzanschlüssen A und B des Wegeventils 10 wird die Hydraulikflüssigkeit zu einem hydraulischen Verbraucher 16 in Form eines Differenzialzylinders und zurück gefördert. Der Verbraucher 16 ist durch eine Masse m belastet. Rückfließende Hydraulikflüssigkeit wird vom Ventil 10 zu einem Rücklaufanschluss T und dann über einen Rücklauf 18 zum Tank 14 geleitet. Ein Load-Sensing-Anschluss LS des Ventils 10 ist mit der Druckwaage IDW und der Pumpe P verbunden.

Die Pumpe P ist eine einstellbare, insbesondere lastdruckgesteuerte Pumpe. Sie fördert die Hydraulikflüssigkeit zu der Druckwaage IDW, die drei Schaltstellungen 20, 30, 32 hat. In der Bildebene ganz rechts ist eine Schaltstellung gezeigt, in der der Fluidfluss unterbrochen ist. Es wird lediglich der Pumpendruck, vorzugsweise gedrosselt durch eine Blende 22, auf die linke Steuerseite 24 der Druckwaage IDW gemeldet, während die rechte Steuerseite 26 vom Lastdruck des Verbrauchers 16 und durch eine Rückstellfeder 28 belastet ist. Übersteigt der Druck auf der linken Seite 24 der Druckwaage IDW den anfänglichen Druck der Rückstellfeder 28, so wird die Druckwaage IDW in eine mittlere Schaltstellung 30 gestellt, in der die Hydraulikflüssigkeit zum Ventil 10 gefördert wird. Gleichzeitig wird ein Pumpendruck P', der zwischen der Druckwaage IDW und dem Ventil 10 abgegriffen wird, über die Druckwaage IDW auf die linke Steuerseite 24 abgebildet. In der linken Schaltstellung 32 der Druckwaage IDW ist die Fluidverbindung zwischen der Pumpe P und dem Ventil 10 erneut unterbrochen, während aber der Pumpendruck, so wie er vor dem Ventil 10 ansteht, weiter auf die linke Seite 24 der Druckwaage IDW gemeldet wird.

An die Individualdruckwaage IDW ist das Ventil 10 angeschlossen. Das Ventil 10 hat insgesamt fünf Schaltstellungen, die nachfolgend im Einzelnen erläutert werden. In der Bildebene ganz links ist eine Hebenstellung 34 dargestellt. Rechts davon ist eine Regenerationsstellung 36 gezeigt. In der mittleren Neutralstellung 38 sind alle Fluidverbindungen unterbrochen. Rechts von der Neutralstellung 38 ist eine Schwimmstellung 40 vorgesehen und ganz rechts weist das Ventil 10 eine Senkenstellung 42 auf. Auf seiner linken Seite 44 wird ein Steuerschieber STS durch eine Federanordnung 46 in der mittleren Neutralstellung 38 zentriert. An seinem rechten Ende 48 kann der Steuerschieber STS mit einem elektromechanischen Aktuator 50 bewegt werden. An die Nutzanschlüsse A und B ist der Differenzialzylinder als Verbraucher 16 angeschlossen. Die Nutzanschlüsse A, B sind mit Drucksensoren 52, 54 gekoppelt, die den dort anstehenden Druck zu einer Steuereinheit ECU weitermelden, welche die Bewegungen des Steuerschiebers STS regelt. Der erste Nutzanschluss A des Ventils 10 ist an eine Bodenseite 56 des Differenzialzylinders 16 angeschlossen. Der zweite Nutzanschluss B ist mit der Stangenseite 58 des Differenzialzylinders 16 gekoppelt. Der Differentialzylinder 16 ist schließlich zur Bewegung einer Masse m vorgesehen, welche eine Kolbenstange 60 mit ihrem Eigengewicht beaufschlagt.

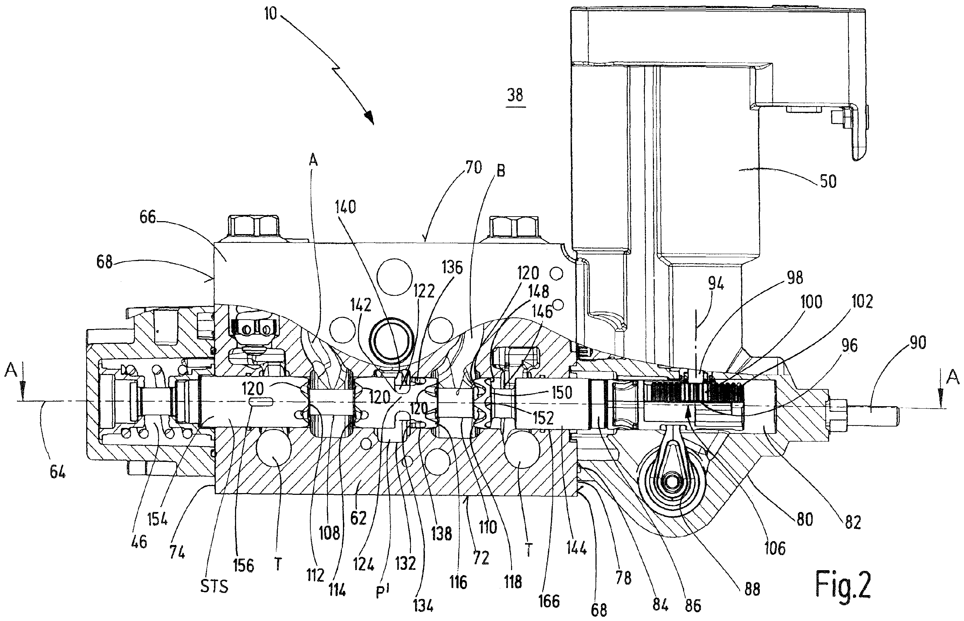

In der Fig. 2 ist eine teilweise Schnittdarstellung des erfindungsgemäßen Ventils 10 gezeigt. Dieses Ventil 10 entspricht von seinem grundsätzlichen Aufbau einer bekannten Ventilvorrichtung, wie sie beispielsweise in der Anmeldung DE 10 2015 015 685 A1 der Schutzrechtsinhaberin offenbart wurde. In Entsprechung zu der in diesem Dokument offenbarten Lösung ist der Steuerschieber STS in einem Ventilgehäuse 62 entlang einer Achse 64 verfahrbar angeordnet. Das Ventilgehäuse 62 weist paarweise einander gegenüberliegende Längsseiten 66 und Stirnseiten 68 auf. Ferner verfügt das Ventilgehäuse 62 über eine Oberseite 70 und eine Unterseite 72. Am Ventilgehäuse 62 befinden sich weiter, wie bei derartigen Ventilvorrichtungen üblich, Gehäuseanschlüsse, wie ein Druckversorgungsanschluss P', zwei Nutzanschlüsse A und B und ein Rücklaufanschluss T.

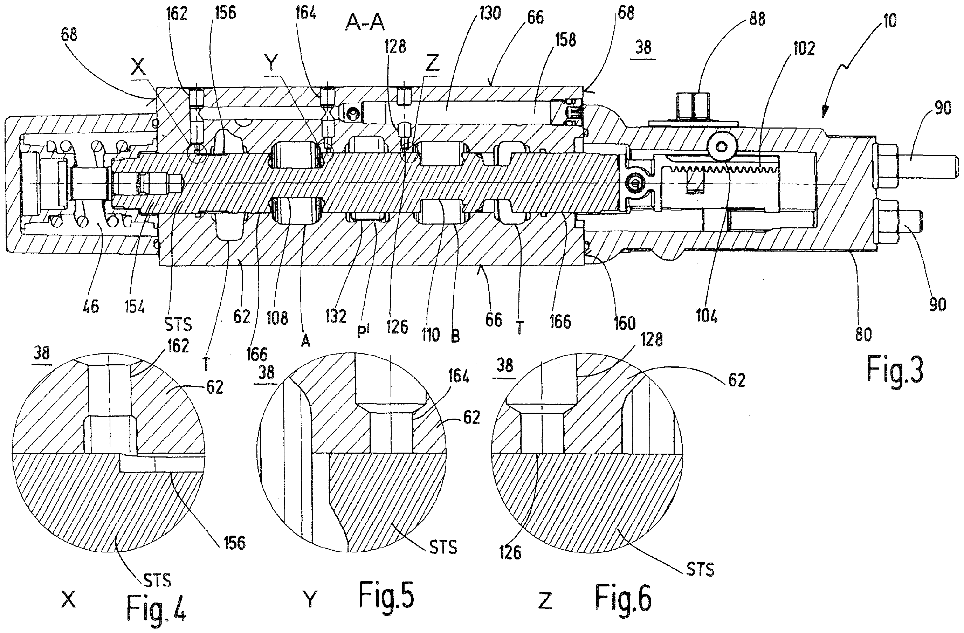

Eine im Gehäuseendbereich 74 befindliche Federanordnung 46 gibt in der bei derartigen Ventilen 10 üblichen Weise für den Steuerschieber STS eine Neutral- oder Mittelstellung 38 vor, wie sie der Steuerschieber STS in Fig. 2 einnimmt. An dem dem Gehäuseendbereich 74 entgegengesetzten, in Fig. 2 rechtsseitig gelegenen Ende 78 schließt sich an das Ventilgehäuse 62 ein Gehäuseendteil 80 an, das eine sich zur Achse 64 koaxial erstreckende innere Kammer 82 aufweist, die gegenüber dem Ventilgehäuse 62 durch eine Dichtung 84 abgedichtet ist, jedoch als Bestandteil des Ventilgehäuses 62 anzusehen ist. In Entsprechung zu dem in der DE 10 2015 015 685 A1 offenbarten Ventil erstreckt sich der Steuerschieber STS mit einem Endabschnitt 86 in die Kammer 82. In ebenfalls der genannten bekannten Lösung entsprechender Weise wirkt der Steuerschieberendabschnitt 86 innerhalb der Kammer 82 mit einem Betätigungsteil 88 einer Notbetätigung sowie einer Hublängenbegrenzung 90 des Steuerschiebers STS zusammen. Da diese ebenfalls der aus dem erwähnten Dokument bekannten Lösung mit Stellschrauben entspricht, erübrigt sich diesbezüglich eine nähere Beschreibung. Der als Aktuator 50 dienende Elektromotor ist am Gehäuseendteil 80 derart angeordnet, dass seine Antriebsachse 94 die Verschiebeachse 64 des Schieberkolbens STS senkrecht schneidet und sich ein an einem Ende 96 einer Motorwelle 98 befindliches Zahnritzel 100 innerhalb der Kammer 82 befindet. Wie am deutlichsten die Fig. 3 zeigt, ist am Endabschnitt des Schieberkolbens STS eine Zahnstange 102 befestigt, mit der das Zahnritzel 100 kämmt. Wie bei der erwähnten bekannten Lösung ist der Steuerkolben STS in der Kammer 82 drehfest geführt, sodass die Zahnstange 102 bei durch das Ritzel 100 bewirkten Axialbewegungen in Anlage an einem führenden Gleitelement 104 verbleibt, das an der Wand der Kammer 82 befestigt ist. Anstelle des gezeigten Gleitelementes 104 könnte auch ein Wälzlager oder eine Rolle vorgesehen sein. Die nach außen hin abgedichtete Kammer 82 steht vom Ventilgehäuse 62 her unter Öl, sodass die von Zahnritzel 100, Zahnstange 102 und Gleitelement 104 gebildete Getriebeanordnung 106 unter Öl läuft. Dabei ist die Abdichtung gegenüber dem Motorgehäuse des Elektromotors durch die zur Achse 64 axial eingebaute O-Ring-Dichtung 84 gebildet.

Beim gezeigten Ausführungsbeispiel ist als Aktuator 50 ein Elektromotor in Form eines permanenterregten Innenläufer-Synchronmotors vorgesehen.

Im Ventilgehäuse 62 ist der erfindungsgemäß geformte Steuerschieber STS angeordnet. Der Steuerschieber STS weist zwei Nutzanschlussausnehmungen 108, 110 auf, die den Nutzanschlüssen A und B zugeordnet sind. Diese Nutzanschlussausnehmungen 108, 110 weisen jeweils an beiden Seiten proportionale Öffnungskanten 112, 114, 116, 118 auf, die jeweils mit keil- oder parabelförmigen Steuernuten 120 versehen sind. Es sind jeweils mehrere derartige Steuernuten 120 auf dem Umfang verteilt vorgesehen. Zwischen den Nutzanschlussausnehmungen 108, 110 ist eine Regenerationsausnehmung 122 vorgesehen, die durch einen Steg 124 unterbrochen ist, der im Mündungsbereich 126 einer Verbindungsleitung 128 einer Load-Sensing-Leitung 130 angeordnet ist. Die Regenerationsausnehmung 122 ermöglicht eine Verbindung des zweiten Nutzanschlusses B mit einem Ringraum 132 des Druckversorgungsanschlusses P', wenn der Steuerschieber STS aus seiner mittleren Neutralstellung 38 nach rechts ausgelenkt wird. Die Regenerationsausnehmung 122 weist auf ihrer den zweiten Nutzanschluss B zugewandten Seite 134 eine proportionale Öffnungskante 136 mit Steuernuten 138 auf, während die gegenüberliegende Steuerkante 140 durch einen einfachen Absatz 142 gebildet ist. Zwischen der zweiten Nutzanschlussausnehmung 110 und einem freien Ende 144 des Steuerschiebers STS, an dem die Zahnstange 102 befestigt ist, ist eine Schwimmausnehmung 146 angeordnet, die auf ihrer dem zweiten Nutzanschluss B zugewandten Seite 148 ebenfalls eine proportionale Öffnungskante 150 mit diesmal kreisabschnittsförmigen, insbesondere halbkreisförmigen, Steuernuten 152 aufweist. Durch die Schwimmausnehmung 146 kann eine Verbindung zwischen dem zweiten Nutzanschluss B und dem Rücklaufanschluss T hergestellt werden. Weiterhin weist der Steuerschieber STS an seinem linken Ende 154 eine in axialer Richtung verlaufende Nut 156 auf, die es ermöglicht, in der Neutralstellung 38 des Steuerschiebers STS und bevorzugt auch in der Schwimmstellung 40 einen Abschnitt der Load-Sensing-Leitung 130 mit dem Rücklaufanschluss zu verbinden.

In der Fig. 3 ist eine weitere Schnittdarstellung in einer horizontalen Ebene durch das Ventil 10 gezeigt. Man erkennt deutlich eine, insbesondere gestufte, Bohrung 158 der Load-Sensing-Leitung 130, die sich von einer rechten Seite 160 in das Ventilgehäuse 62 erstreckt. Weiterhin sind drei, vorzugsweise gestufte, Verbindungsbohrungen 128, 162, 164 zur Bohrung 166 des Steuerschiebers STS vorgesehen. Die linke Verbindungsbohrung 162 ist so angeordnet, dass in der gezeigten Neutralstellung 38 über die Nut 156 die Verbindung zum Rücklaufanschluss T hergestellt werden kann. Die übrigen beiden Verbindungsbohrungen 164, 128 sind durch den Steuerschieber STS in der gezeigten Darstellung verdeckt, sodass sie den Druck in den Nutzanschlüssen A, B nicht weitermelden können. Die Fig. 4 bis 6 zeigen in Detaildarstellungen nochmals, dass in der Neutralstellung 38 des Steuerschiebers STS die linke Verbindungsbohrung 162 mit der Nut 156 in Überdeckung ist, während die übrigen, den Nutzanschlüssen A, B zugeordneten Verbindungsbohrungen 164, 128 durch den Steuerschieber STS gesperrt sind.

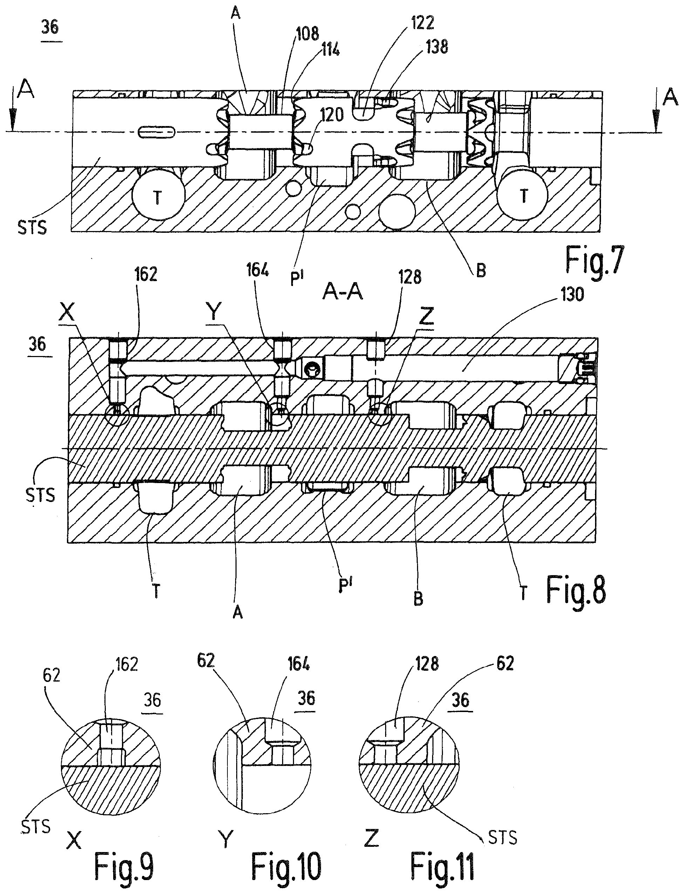

In den Fig. 7 bis 11 ist das Ventil 10 in der Regenerationsstellung 36 gezeigt. In dieser Stellung 36 wird eine Fluidverbindung vom Druckversorgungsanschluss P' über die erste Nutzanschlussausnehmung 108 mittels der an der Öffnungskante 114 vorgesehenen Steuerkanten 120 zum ersten Nutzanschluss A hergestellt. Weiterhin ist der zweite Nutzanschluss B über die Steuernut 138 der Regenerationsausnehmung 122 mit dem Druckversorgungsanschluss P' und über diesen mit dem ersten Nutzanschluss A verbunden. Eine Verbindung vom zweiten Nutzanschluss B zum Rücklaufanschluss T besteht nicht. Wie man in der Fig. 8 sehen kann, ist in dieser Stellung des Steuerschiebers STS lediglich über die mittlere Verbindungsbohrung 164 eine Fluidverbindung vom ersten Nutzanschluss A, der ein Teil des Vorlaufs ist, zur Load-Sensing-Leitung hergestellt. Die beiden übrigen Verbindungsbohrungen 128, 162 sind durch den Steuerschieber verschlossen. Auf diese Weise wird der Lastdruck am ersten Nutzanschluss A in die Load-Sensing-Leitung 130 gemeldet.

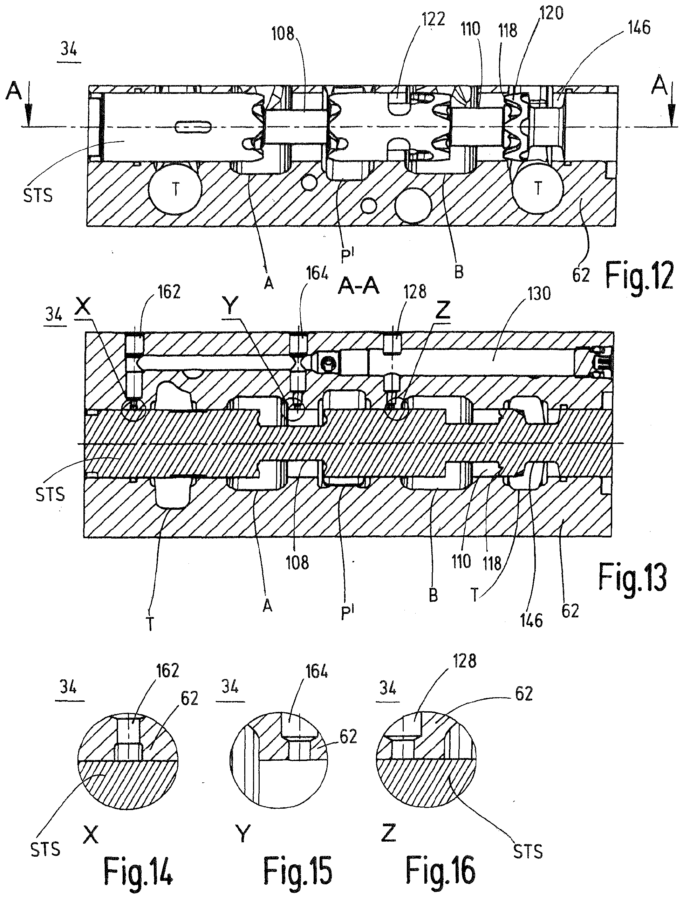

In den Fig. 12 bis 16 ist die Hebenstellung 34 des Steuerschiebers STS gezeigt. Der Steuerschieber STS befindet sich nunmehr in seiner rechten Endstellung. In dieser Stellung ist der Druckversorgungsanschluss P' nach wie vor mit dem ersten Nutzanschluss A über die erste Nutzanschlussausnehmung 108 verbunden. Weiterhin besteht eine Fluidverbindung vom zweiten Nutzanschluss B über die Steuernuten 120 an der Öffnungskante 118 der zweiten Nutzanschlussausnehmung 110 zum Rücklaufanschluss T. Die Regenerationsausnehmung 122 ist so weit nach rechts im Ventilgehäuse 62 verschoben, dass keine Verbindung mehr zwischen dem zweiten Nutzanschluss B und dem Druckversorgungsanschluss P' besteht. Mithin sind die Nutzanschlüsse A, B voneinander getrennt. Die Schwimmausnehmung 146 ist in dieser Stellung ohne Funktion. Wie man in den Fig. 13 bis 16 sehen kann, meldet weiterhin die mittlere Verbindungsbohrung 164 den Lastdruck am Vorlauf bzw. ersten Nutzanschluss A in die Load-Sensing-Leitung 130. Die Verbindungsbohrungen 128, 162 auf der rechten und linken Seite sind durch den Steuerschieber STS nach wie vor geschlossen.

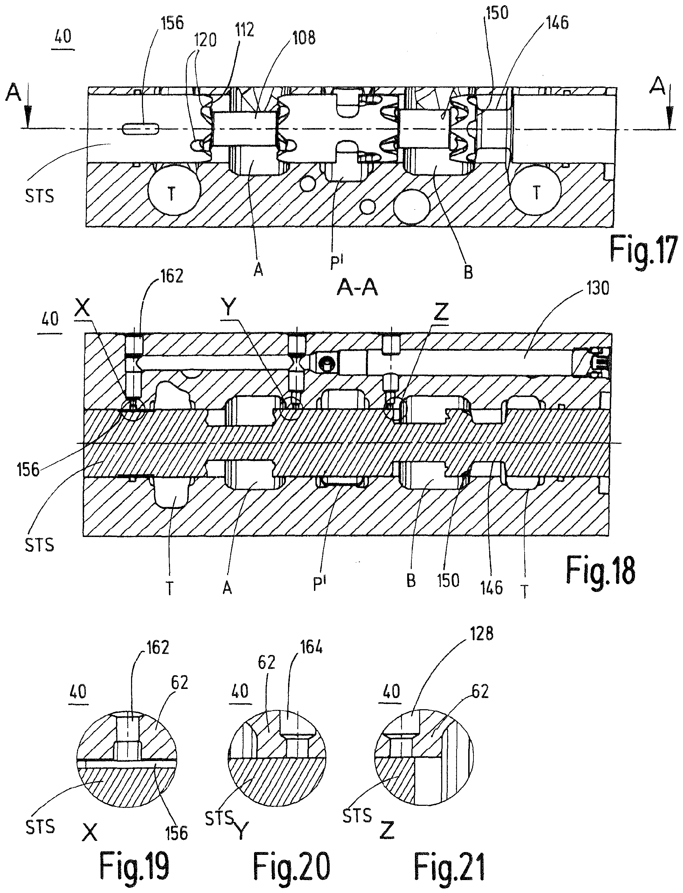

In den Fig. 17 bis 21 ist der Steuerschieber STS in der Schwimmstellung 40 gezeigt. In dieser Stellung 40 ist der Steuerschieber STS nach links verschoben, sodass die Verbindung vom ersten Nutzanschluss A über die Steuernuten 120 an der linken Öffnungskante 112 der ersten Nutzanschlussausnehmung 108 zum Rücklaufanschluss T hergestellt ist. Eine Verbindung vom Druckversorgungsanschluss P' zu einem der Nutzanschlüsse A, B besteht nicht. Weiterhin ist der zweite Nutzanschluss B über die Öffnungskante 150 der Schwimmausnehmung 146 mit dem Rücklaufanschluss T verbunden. Die Load-Sensing-Leitung 130 ist über die linke Verbindungsbohrung 162 und die Nut 156 im Steuerschieber STS zum Rücklaufanschluss T hin druckentlastet. Die beiden rechten Verbindungsbohrungen 128, 162 sind durch den Steuerschieber STS gesperrt.

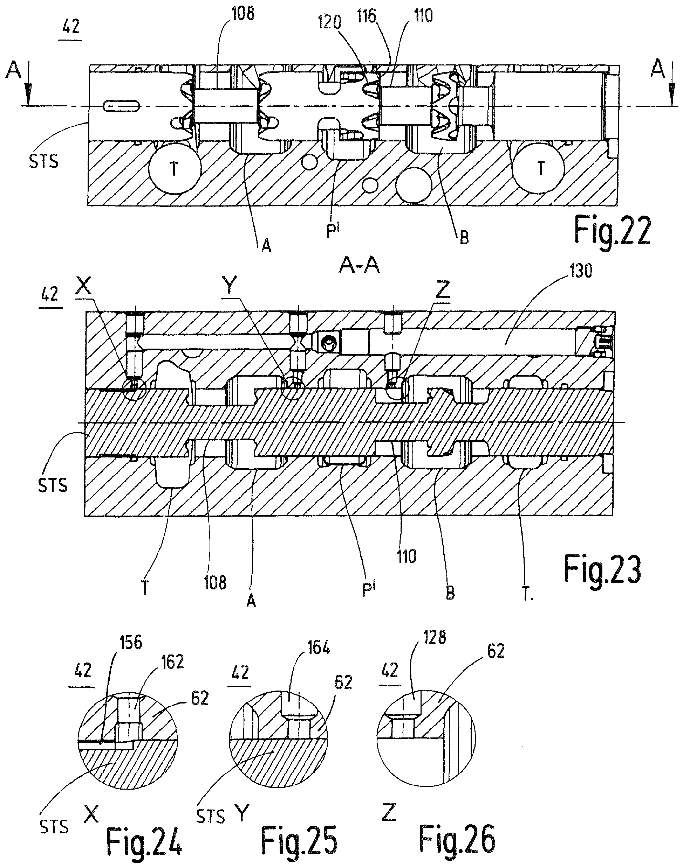

In den Fig. 22 bis 26 schließlich ist die Senkenstellung 42 gezeigt. In der Senkenstellung 42 ist der Steuerschieber STS in die linke Endstellung verschoben. Der Druckversorgungsanschluss P' ist über die Steuernuten 120 der linken Öffnungskante 116 der zweiten Nutzanschlussausnehmung 110 mit dem zweiten Nutzanschluss B verbunden, während der erste Nutzanschluss A über die erste Nutzanschlussausnehmung 108 mit dem Rücklaufanschluss T verbunden ist. Die Regenerationsausnehmung 122 und die Schwimmausnehmung 146 sind wirkungslos. Wie man in den Fig. 23 bis 26 sehen kann, meldet nunmehr die rechte Verbindungsbohrung 128 den Lastdruck am zweiten Nutzanschluss B, der in dieser Stellung Teil des Vorlaufs ist, in die Load-Sensing-Leitung 130. Die beiden übrigen Verbindungsbohrungen 162, 164 sind durch den Steuerschieber STS geschlossen.

Mit dem erfindungsgemäßen Ventil 10 lassen sich die energieeffizienteren Logiken Neutral-Regeneration-Heben und Neutral-Schwimmen-Senken verwirklichen, in denen sichergestellt ist, dass zunächst die im Differentialzylinder 16 zur Verfügung stehende Hydraulikflüssigkeit zum Bewegen der Last m herangezogen wird, ehe zusätzliche Hydraulikflüssigkeit von der Pumpe P eingespeist wird. Auf diese Weise wird beim Lastfall "Heben mit niedriger Last" ein sehr geringer Pumpenvolumenstrom benötigt und im Lastfall "Senken mit hoher Last" kann es sogar sein, dass gar kein Pumpenvolumenstrom benötigt wird. Dies hat so keine Entsprechung im Stand der Technik.

## Patentansprüche

1. Ventil mit einem Ventilgehäuse (62), das mindestens einen Druckversorgungsanschluss (P'), einen ersten Nutzanschluss (A), einen zweiten Nutzanschluss (B) und einen Rücklaufanschluss (T) aufweist und in dem zum Ansteuern dieser einzelnen Anschlüsse (P', A, B, T) längsverfahrbar ein Steuerschieber (STS) geführt ist, wobei in einer mittleren Neutralstellung (38) des Steuerschiebers (STS) die Fluidverbindungen zwischen den Anschlüssen (P', A, B, T) unterbrochen sind, wobei bei Bewegung des Steuerschiebers (STS) aus der Neutralstellung (38) in Richtung einer ersten Endstellung (34) des Steuerschiebers (STS) der Druckversorgungsanschluss (P') mit dem ersten Nutzanschluss (A) und der zweite Nutzanschluss (B) mit dem Rücklaufanschluss (T) fluidführend verbunden ist, wobei bei Bewegung des Steuerschiebers (STS) aus der Neutralstellung (38) in Richtung einer zweiten, der ersten Endstellung (34) gegenüberliegenden Endstellung (42) des Steuerschiebers (STS) der Druckversorgungsanschluss (P') mit dem zweiten Nutzanschluss (B) und der erste Nutzanschluss (A) mit dem Rücklaufanschluss (T) verbunden ist, wobei in den Endstellungen (34, 42) des Steuerschiebers (STS) die Nutzanschlüsse (A, B) voneinander getrennt sind, wobei eine Schwimmstellung (40), in der die Nutzanschlüsse (A, B) miteinander fluidführend verbunden sind, zwischen der Neutralstellung (38) und der zweiten Endstellung (42) des Steuerschiebers (STS) vorgesehen ist, **dadurch gekennzeichnet, dass** eine Regenerationsstellung (36), in der die Nutzanschlüsse (A, B) miteinander fluidführend verbunden sind, zwischen der Neutralstellung (38) und der ersten Endstellung (34) des Steuerschiebers (STS) vorgesehen ist.

2. Ventil nach Anspruch 1, **dadurch gekennzeichnet, dass** in der Regenerationsstellung (36) der erste Nutzanschluss (A) mit dem zweiten Nutzanschluss (B) über den Druckversorgungsanschluss (P'), vorzugsweise über mindestens zwei umfangsseitige Ausnehmungen (108, 122) am Steuerschieber (STS), fluidführend verbunden ist.

3. Ventil nach Anspruch 1 oder 2, **dadurch gekennzeichnet, dass** in der Schwimmstellung (40) der erste Nutzanschluss (A) mit dem zweiten Nutzanschluss (B) über den Rücklaufanschluss (T), vorzugsweise über zwei umfangsseitige Ausnehmungen (108, 146) am Steuerschieber (STS), fluidführend verbunden ist.

4. Ventil nach Anspruch 2 oder 3, **dadurch gekennzeichnet, dass** der Steuerschieber (STS) zwei Nutzanschlussausnehmungen (108, 110) aufweist, die mit den Nutzanschlüssen (A, B) in Überdeckung sind, und dass der Steuerschieber (STS) eine weitere Regenerationsausnehmung (122) aufweist, die zwischen den Nutzanschlussausnehmungen (108, 110) angeordnet ist, und dass der Steuerschieber (STS) eine Schwimmausnehmung (146) aufweist, die zwischen einer Nutzanschlussausnehmung (110) und einem benachbarten freien Ende (144) des Steuerschiebers (STS) angeordnet ist.

5. Ventil nach einem der vorstehenden Ansprüche, **dadurch gekennzeichnet, dass** im Ventilgehäuse (62) eine Load-Sensing-Leitung (130) vorgesehen ist, die in der Neutralstellung (38) des Steuerschiebers (STS) über eine Ausnehmung (156) des Steuerschiebers (STS) zum Rücklaufanschluss (T) hin druckentlastet ist.

6. Ventil nach Anspruch 5, **dadurch gekennzeichnet, dass** die Load-Sensing-Leitung (130) mit einem der Nutzanschlüsse (A, B) direkt verbunden ist, wenn sich der Steuerschieber (STS) außerhalb der Neutralstellung (38) befindet.

7. Ventil nach einem der vorstehenden Ansprüche, **dadurch gekennzeichnet, dass** Drucksensoren (52, 54) mit den Nutzanschlüssen (A, B) verbindbar sind, die an eine Steuereinrichtung (ECU) angeschlossen sind, welche die Bewegung des Steuerschiebers (STS) steuert.

8. Ventil nach einem der vorstehenden Ansprüche 4 bis 7, **dadurch gekennzeichnet, dass** die Ausnehmungen (108, 110, 122, 146) des Steuerschiebers (STS) mindestens eine proportionale Öffnungskante (112, 114, 116, 118, 136, 150) mit mindestens einer Steuernut (120, 138, 152) aufweist.

9. Ventil nach einem der vorstehenden Ansprüche, **dadurch gekennzeichnet, dass** ein elektromechanischer Aktuator (50) zur Bewegung des Steuerschiebers (STS) vorgesehen ist, der eine genaue Lageregelung des Steuerschiebers (STS) und einen ruckfreien Übergang zwischen den Stellungen (38-42) des Steuerschiebers (STS) ermöglicht.

## Claims

1. Valve having a valve housing (62) which comprises at least one pressure supply port (P'), one first work port (A), one second work port (B) and one return port (T) and in which a valve spool (STS) is guided so as to be longitudinally movable for controlling these individual ports (P', A, B, T), wherein, in a central neutral position (38) of the valve spool (STS), the fluid connections between the ports (P', A, B, T) are interrupted, wherein, when the valve spool (STS) is moved from the neutral position (38) towards a first end position (34) of the valve spool (STS), the pressure supply port (P') is connected to the first work port (A) and the second work port (B) is connected to the return port (T) in a fluid-conducting manner, wherein, when the valve spool (STS) is moved from the neutral position (38) towards a second end position (42) of the valve spool (STS), opposite the first end position (34), the pressure supply port (P') is connected to the second work port (B) and the first work port (A) is connected to the return port (T), wherein, in the end positions (34, 42) of the valve spool (STS), the work ports (A, B) are separated from each other, wherein a floating position (40), in which the work ports (A, B) are connected to each other in a fluid-conducting manner, is provided between the neutral position (38) and the second end position (42) of the valve spool (STS), **characterised in that** a regeneration position (36), in which the work ports (A, B) are connected to each other in a fluid-conducting manner, is provided between the neutral position (38) and the first end position (34) of the valve spool (STS).

2. Valve according to claim 1, **characterised in that**, in the regeneration position (36), the first work port (A) is connected to the second work port (B) in a fluid-conducting manner via the pressure supply port (P'), preferably via at least two peripheral recesses (108, 122) on the valve spool (STS).

3. Valve according to claim 1 or 2, **characterised in that**, in the floating position (40), the first work port (A) is connected to the second work port (B) in a fluid-conducting manner via the return port (T), preferably via two peripheral recesses (108, 146) on the valve spool (STS).

4. Valve according to claim 2 or 3, **characterised in that** the valve spool (STS) has two work port recesses (108, 110) which are in overlapping relationship with the work ports (A, B), and **in that** the valve spool (STS) has a further regeneration recess (122) which is arranged between the work port recesses (108, 110), and **in that** the valve spool (STS) has a float recess (146) which is arranged between a work port recess (110) and an adjacent free end (144) of the valve spool (STS).

5. Valve according to one of the preceding claims, **characterised in that**, a load-sensing line (130) is provided in the valve housing (62) which, in the neutral position (38) of the valve spool (STS), is pressure-compensated towards the return port (T) via a recess (156) of the valve spool (STS).

6. Valve according to claim 5, **characterised in that** the load-sensing line (130) is directly connected to one of the work ports (A, B) when the valve spool (STS) is outside the neutral position (38).

7. Valve according to one of the preceding claims, **characterised in that** pressure sensors (52, 54) can be connected to the work ports (A, B), which sensors are connected to a control device (ECU) which controls the movement of the valve spool (STS).

8. Valve according to one of the preceding claims 4 to 7, **characterised in that** the recesses (108, 110, 122, 146) of the valve spool (STS) have at least one proportional opening edge (112, 114, 116, 118, 136, 150) with at least one control groove (120, 138, 152).

9. Valve according to one of the preceding claims, **characterised in that** an electromechanical actuator (50) is provided for moving the valve spool (STS) which enables precise position control of the valve spool (STS) and a smooth transition between the positions (38-42) of the valve spool (STS).

## Revendications

1. Soupape comprenant un corps (62) de soupape, qui a au moins un raccord (P') d'alimentation en pression, un premier raccord (A) utile, un deuxième raccord (B) utile et un raccord (T) de retour, et dans lequel, pour commander ces divers raccords (P', A, B, T) un tiroir (STS) de commande est guidé avec possibilité de se déplacer longitudinalement, dans laquelle, dans une position (38) neutre médiane du tiroir (STS) de commande, les communications fluidiques entre les raccords (P', A, B, T) sont interrompues, dans laquelle, en déplaçant le tiroir (STS) de commande de la position (38) neutre en direction d'une première position (34) d'extrémité du tiroir (STS) de commande, on met en communication fluidique le raccord (P') d'alimentation en pression avec le premier raccord (A) utile et le deuxième raccord (B) utile avec le raccord (T) de retour, dans laquelle en déplaçant le tiroir (STS) de commande de la position (38) neutre en direction d'une deuxième position (42) d'extrémité, opposée à la première position (34) d'extrémité, du tiroir (STS) de commande, on met en communication le raccord (P') d'alimentation en pression avec le deuxième raccord (B) utile et le premier raccord (A) utile avec le raccord (T) de retour, dans laquelle, dans les positions (34, 42) d'extrémité du tiroir (STS) de commande, les raccords (A, B) utiles sont séparés l'un de l'autre, dans laquelle il est prévu, entre la position (38) neutre et la deuxième position (42) d'extrémité du tiroir (STS) de commande, une position (40) flottante, dans laquelle les raccords (A, B) utiles communiquent fluidiquement entre eux, **caractérisé en ce qu'**il est prévu, entre la position (38) neutre et la première position (34) d'extrémité du tiroir (STS) de commande, une position (36) de régénération, dans laquelle les raccords (A, B) utiles communiquent fluidiquement entre eux.

2. Soupape suivant la revendication 1, **caractérisée en ce que**, dans la position (36) de régénération, le premier raccord
(A) utile communique fluidiquement avec le deuxième raccord
(B) utile par le raccord (P') d'alimentation en pression, de préférence par au moins deux évidements (108, 122) du côté du pourtour du tiroir (STS) de commande.

3. Soupape suivant la revendication 1 ou 2, **caractérisée en ce que**, dans la position (40) flottante, le premier raccord (A) utile communique fluidiquement avec le deuxième raccord (B) utile par le raccord (T) de retour, de préférence par deux évidements (108, 146) du côté du pourtour du tiroir (STS) de commande.

4. Soupape suivant la revendication 2 ou 3, **caractérisée en ce que** le tiroir (STS) de commande a deux évidements (108, 110) de raccord utiles, qui sont en recouvrement avec les raccords (A, B) utiles, et **en ce que** le tiroir (STS) de commande a un autre évidement (122) de régénération, qui est disposé entre les évidements (108, 110) de raccord utiles et **en ce que** le tiroir (STS) de commande a un évidement (146) flottant, qui est disposé entre un évidement (110) de raccord utile et une extrémité (144) libre voisine du tiroir (STS) de commande.

5. Soupape suivant l'une des revendications précédentes, **caractérisée en ce qu'**il est prévu, dans le corps (62) de la soupape, un conduit (130) load sensing qui, dans la position (38) neutre du tiroir (STS) de commande, est déchargé en pression par un évidement (156) du tiroir (STS) de commande menant au raccord (T) de retour.

6. Soupape suivant la revendication 5, **caractérisée en ce que** le conduit (130) load sensing communique directement avec l'un des raccords (A, B) utiles, si le tiroir (STS) de commande se trouve en dehors de la position (38) neutre.

7. Soupape suivant l'une des revendications précédentes, **caractérisée en ce que** des capteurs (52, 54) de pression peuvent être reliés aux raccords (A, B) de pression et sont raccordés à un dispositif (ECU) de commande, qui commande le déplacement du tiroir (STS) de commande.

8. Soupape suivant l'une des revendications 4 à 7, **caractérisée en ce que** les évidements (108, 110, 122, 146) du tiroir (STS) de commande ont au moins un bord (112, 114, 116, 118, 136, 150) d'ouverture proportionnelle, ayant au moins une rainure (120, 138, 152) de commande.

9. Soupape suivant l'une des revendications précédentes, **caractérisée en ce qu'**il est prévu un actionneur (50) électromécanique de déplacement du tiroir (STS) de commande, qui rend possible une régulation précise en position du tiroir (STS) de commande et une transition sans à-coup entre les positions (38 à 42) du tiroir (STS) de commande.
